# FASCICULE DE BREVET EUROPEEN

(11) **EP 2 207 286 B1**
(45) Date de publication et mention de la délivrance du brevet: **22.08.2012**
(21) Numéro de dépôt: 10150462.9
(22) Date de dépôt: 11.01.2010
(51) Int. Cl.: H04J 3/06

(54) **Procédé et équipement de distribution d'une référence de fréquence dans un réseau hétérogène**
Verfahren und Vorrichtung zur Verteilung einer Referenzfrequenz in einem heterogenen Netzwerk
Method and apparatus for distributing a reference frequency in an heterogenous network

(30) Priorité: 12.01.2009 FR 0900111
(43) Date de publication de la demande: 14.07.2010
(73) Titulaire: Alcatel Lucent, 75007 Paris (FR)
(72) Inventeur: Le Pallec, Michel, 91620, NOZAY (FR); Biu, Dinh Thai, 91620, NOZAY (FR)
(74) Mandataire: Sciaux, Edmond

(56) Documents cités:
- WO-A-2008/134924
- US-B1- 7 103 072
- US-B1- 7 483 450
- SILVANA RODRIGUES ED - ANONYMOUS: "IEEE-1588 and Synchronous Ethernet in Telecom" INFORMATION SCIENCES AND SYSTEMS, 2007. CISS '07. 41ST ANNUAL CON FERENCE ON, IEEE, PI, 1 octobre 2007 (2007-10-01), pages 138-142, XP031161293 ISBN: 978-1-4244-1063-7

## Description

La présente invention fait partie du domaine des réseaux de télécommunication et plus particulièrement de la synchronisation dans un réseau de commutation de paquets.

Dans les réseaux de télécommunications, certaines applications requièrent une synchronisation très précise entre les noeuds du réseau. Ainsi des signaux de synchronisation doivent être échangés entre les différentes horloges se trouvant dans les différents noeuds du réseau. La synchronisation se fait par la couche physique ou par échanges de messages de synchronisation entre une horloge maître et une horloge esclave. De plus, avec certains protocoles de distribution de fréquence, des messages d'état de synchronisation permettent de s'assurer de la qualité de la synchronisation. Néanmoins, dans des réseaux hétérogènes, c'est-à-dire comprenant des domaines où la distribution de la fréquence de synchronisation est établit selon un premier type de protocole et des domaines où la distribution de la fréquence de synchronisation est établie selon un deuxième type de protocole, la transmission des messages d'état de synchronisation entre les différents domaines n'est pas toujours possible ce qui empêche l'implantation et la mise en oeuvre de certaines applications. Ainsi, entre les domaines dont la synchronisation est assurée par une technologie de couche physique synchrone, tel que les domaines Synchronous Ethernet (SyncE) ou Synchronous Optical Networking / Synchronous Digital Hierarchy (SONET/SDH), et les domaines dont la synchronisation est assurée par un protocole de distribution du temps, tel que les domaines IEEE 1588 V2, les messages d'état de synchronisation ne sont pas compatibles et sont donc bloqués à l'interface entre ces domaines.

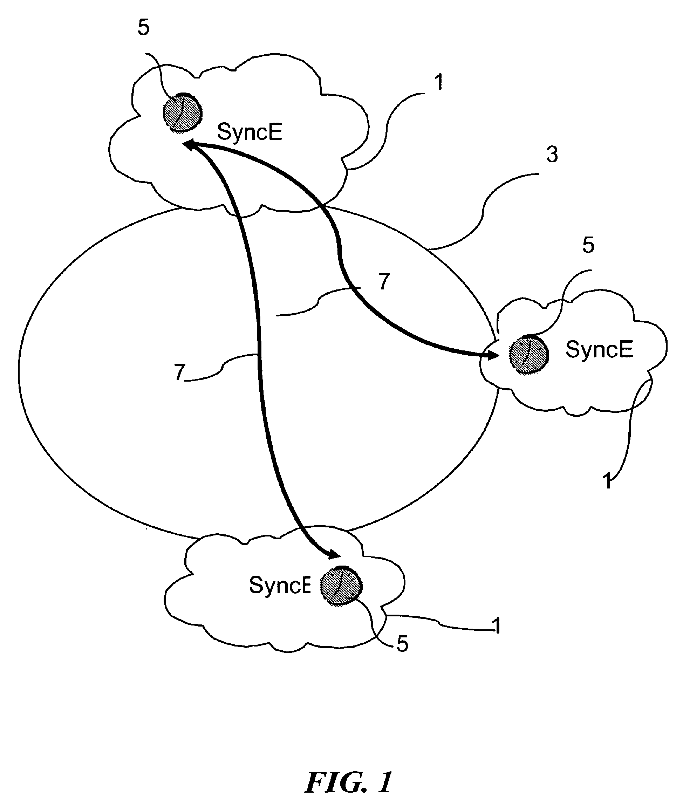

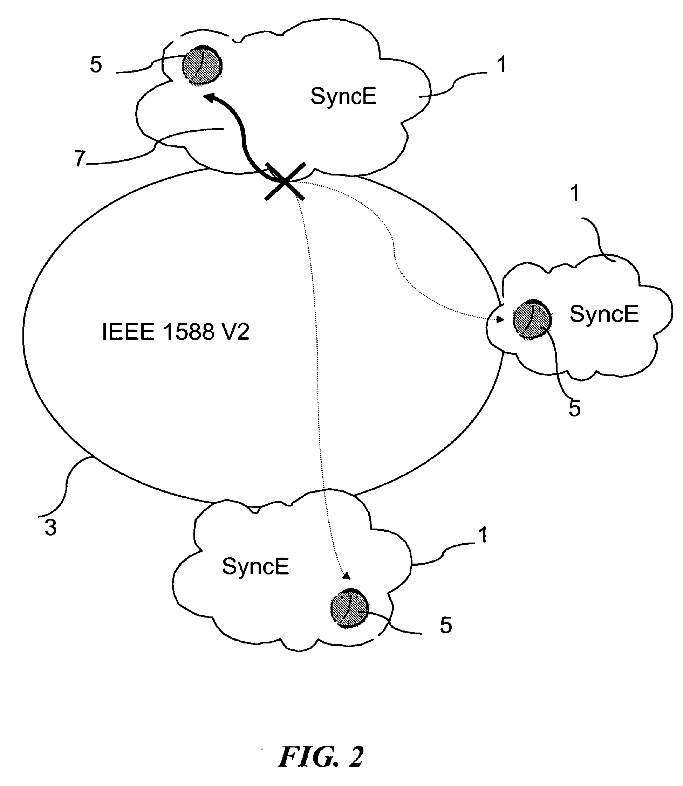

Un réseau hétérogène comprenant trois domaines de type Synchronous Ethernet (SyncE) 1 interconnectés par un domaine d'un autre type 3 (Synchronous Digital Hierarchy (SDH) par exemple) est représenté sur la figure 1. Dans les domaines de type SyncE 1, les messages d'état de synchronisation échangés de façon bidirectionnelle entre les horloges 5 sont des messages de type Synchronous Status Message (SSM) 7, qui permettent d'assurer l'organisation de la hiérarchie de synchronisation ainsi que le suivi de la qualité des signaux de synchronisation. Ainsi des signaux SSM 7 sont transmis par le domaine intermédiaire 3 entre les domaines SyncE 1 afin d'assurer la qualité de la synchronisation des horloges 5 des autres domaines de type SyncE 1 sur l'horloge maître primaire/principale située dans l'un des domaines SyncE 1. Ce mécanisme est rendu possible par la compatibilité SSM de SyncE et SDH. Or, lorsque ce domaine intermédiaire 3 est de type IEEE 1588 V2, par exemple, comme représenté sur la figure 2, les signaux SSM étant incompatibles avec la chaîne de distribution du temps du domaine IEEE 1588 V2, il en résulte que les signaux SSM 7 sont bloqués à l'interface entre les domaines de type SyncE 1 et le domaine de type IEEE 1588 V2 3. La traçabilité des signaux de synchronisation entre deux domaines de type SyncE 1 n'est donc pas assuré.

C'est donc un objet de la présente invention de surmonter les inconvénients précités de l'état de la technique et de fournir une méthode permettant de transmettre des messages d'état de synchronisation entre un premier et un deuxième domaine du réseau dans lesquels la distribution de la fréquence se fait par une technologie de couche physique synchrone, lesdits premier et deuxième domaines étant séparés par un troisième domaine dont la synchronisation est gérée par un protocole de distribution du temps.

A cet effet, l'invention concerne un procédé de distribution d'une référence de fréquence dans un réseau hétérogène à commutation de paquets comprenant un premier et un deuxième domaine dans lesquels une fréquence de synchronisation est distribuée par une technologie de couche physique synchrone et un troisième domaine comprenant une chaîne de distribution du temps et de la fréquence gérée par un protocole de distribution du temps, ledit troisième domaine interconnectant lesdits premier et deuxième domaine et ledit procédé comprenant les étapes suivantes:
- établir un flux de signalisation transmis à travers le troisième domaine par ladite chaîne de distribution afin de distribuer une référence de fréquence du premier domaine vers le deuxième domaine à l'aide du protocole de distribution du temps et,
- envoyer, dans ledit flux de signalisation, des messages d'état de synchronisation issus du premier ou du deuxième domaine afin d'assurer le suivi de la qualité de cette distribution dans le troisième domaine.

Selon un autre mode de réalisation, l'étape d'envoi, dans ledit flux de signalisation, des messages d'état de synchronisation issus du premier ou du deuxième domaine comprend les étapes suivantes:
- encapsuler, à l'entrée du troisième domaine, les messages d'état de synchronisation non modifiés issus respectivement du premier ou du deuxième domaine dans des paquets gérés par le protocole de distribution du temps;
- transmettre lesdits paquets à travers le troisième domaine;
- décapsuler, à la sortie du troisième domaine, lesdits messages d'état de synchronisation non modifiés afin de les transmettre respectivement au deuxième ou au premier domaine.

Selon un autre mode de réalisation, les messages d'état de synchronisation sont des messages de type Synchronous Status Message (SSM).

Selon un mode de réalisation additionnel, le protocole de distribution du temps est de type IEEE 1588 V2.

Selon un mode de réalisation supplémentaire, en cas d'échec de la transmission du flux de signalisation à travers le troisième domaine par ladite chaîne de distribution, on enclenche des mécanismes de protection et de réorganisation de la topologie de synchronisation du troisième domaine.

Selon un autre mode de réalisation, la topologie de synchronisation entre le premier et le deuxième domaine est déterminée par le protocole de distribution du temps.

Selon un mode de réalisation supplémentaire, le flux de signalisation à travers le troisième domaine est réalisé par un tunnel entre des éléments de réseau associés aux horloges esclave de frontière du deuxième domaine et des éléments de réseau associés aux horloges maître ou grand maître de frontière du premier domaine.

Selon un mode de réalisation additionnel, on transmet les messages d'état de synchronisation de type Synchronous Status Message (SSM), dans le troisième domaine, sur le même chemin réseau que des messages de synchronisation.

Selon un mode de réalisation supplémentaire, on intègre les messages d'état de synchronisation de type Synchronous Status Message (SSM) dans des messages de synchronisation du troisième domaine.

Selon un autre mode de réalisation, on ajoute, à l'entrée du troisième domaine, des champs de données additionnels reprenant la sémantique Synchronous Status Message (SSM) aux messages de synchronisation.

Selon un mode de réalisation additionnel, les champs de données additionnels comprennent un champ Type Length Value (TLV).

Selon un mode de réalisation supplémentaire, le flux de signalisation comprenant les messages de type Synchronous Status Message (SSM) intégrés dans les messages de synchronisation est reconfiguré, de manière dynamique, en cas d'échec de la transmission dudit flux à travers le troisième domaine.

Selon un autre mode de réalisation, la reconfiguration comprend une reconfiguration de la hiérarchie d'horloge assurée par le protocole de distribution du temps du troisième domaine.

La présente invention concerne également un équipement de transmission de flux de signalisation dans un domaine géré par un protocole de distribution du temps comprenant des moyens aptes à:
- établir un flux de signalisation à travers ledit domaine géré par un protocole de distribution du temps,
- encapsuler, à l'entrée dudit domaine géré par le protocole de distribution du temps, des messages d'état de synchronisation non modifiés issus d'un premier domaine dans lequel une fréquence de synchronisation est distribuée par une technologie de couche physique synchrone dans des paquets gérés par le protocole de distribution du temps,
- transmettre lesdits paquets à travers ledit domaine géré par le protocole de distribution du temps,
- décapsuler, à la sortie dudit domaine, lesdits messages d'état de synchronisation non modifiés afin de les transmettre à un deuxième domaine dans lequel une fréquence de synchronisation est distribuée par une technologie de couche physique synchrone.

Selon un mode de réalisation supplémentaire, l'équipement comprend des moyens permettant d'ajouter à des messages de synchronisation du protocole de temps des champs de données additionnels reprenant la sémantique Synchronous Status Message (SSM).

Selon un mode de réalisation additionnel, l'équipement comprend des moyens de détection d'un événement de type « clock failure » se produisant durant la transmission de messages de type Synchronous Status Message (SSM) intégrés dans des messages de synchronisation.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 est un schéma représentant un réseau hétérogène comprenant trois domaines de type SyncE et un autre domaine interconnectant les domaines SyncE dont la synchronisation est assurée par un protocole différent;
- la figure 2 est un schéma représentant le réseau de la figure 1 dont le domaine interconnectant les domaines de type SyncE est un domaine de type IEEE 1588 V2;
- la figure 3 est un schéma représentant le réseau de la figure 2 et comprenant un « tunnel réseau » permettant la transmission de signaux SSM à travers les noeuds de réseau associés au domaine de type IEEE 1588 V2;
- la figure 4 est un schéma représentant une redirection d'un flux SSM intégré dans des signaux de signalisation de type IEEE 1588 V2 provoquée par un événement de type « clock failure » dans le domaine IEEE 1588 V2 du réseau de la figure 2;

Le terme « réseau hétérogène » (pour la synchronisation) correspond à un réseau comprenant plusieurs protocoles d'établissement de la synchronisation des horloges agissant sur différents domaines du réseau.

Le terme « tunnel» correspond à une liaison virtuelle point à point dans laquelle un paquet fonctionnant sous un premier protocole est encapsulé pour être placé dans un paquet fonctionnant sous un deuxième protocole.

Le terme « SSM » correspond à l'acronyme Synchronous Status Message utilisé pour les technologies Synchronous Ethernet et SONET/SDH.

Le terme « IEEE » correspond à l'acronyme Institute of Electrical and Electronics Engineers.

Le terme « SyncE » correspond à l'acronyme Synchronous Ethernet.

Le terme « domaine SyncE ou domaine de type SyncE » correspond à un domaine dont la distribution d'une fréquence de synchronisation est établit selon le protocole ITU-T SyncE.

Le terme « domaine IEEE 1588 V2 ou domaine de type IEEE 1588 V2 » correspond à un domaine dont la distribution du temps est établit selon le protocole IEEE 1588 V2.

Le terme « horloge de frontière » correspond à une horloge située à l'interface entre deux domaines de type différent.

Le terme « clock failure » désigne une panne ou un défaut survenu au niveau d'une horloge.

Le terme « traçabilité des signaux de synchronisation » correspond au suivi de la transmission des signaux de synchronisation entre les horloges en respectant des critères prédéfinis (comme la qualité d'horloge par exemple) afin de maintenir une chaîne d'horloge synchronisée.

Le terme « chemin réseau » définit un ensemble de noeuds du réseau permettant la transmission de signaux d'un point du réseau à un autre.

Le terme « message d'état de synchronisation » correspond à un type de message permettant d'assurer la qualité et la traçabilité des messages de synchronisation échangés entre les différentes horloges du réseau.

Les différents éléments du dispositif selon l'invention vont maintenant être décrits plus en détail en référence aux figures. Sur ces figures, les éléments identiques portent les mêmes numéros de référence.

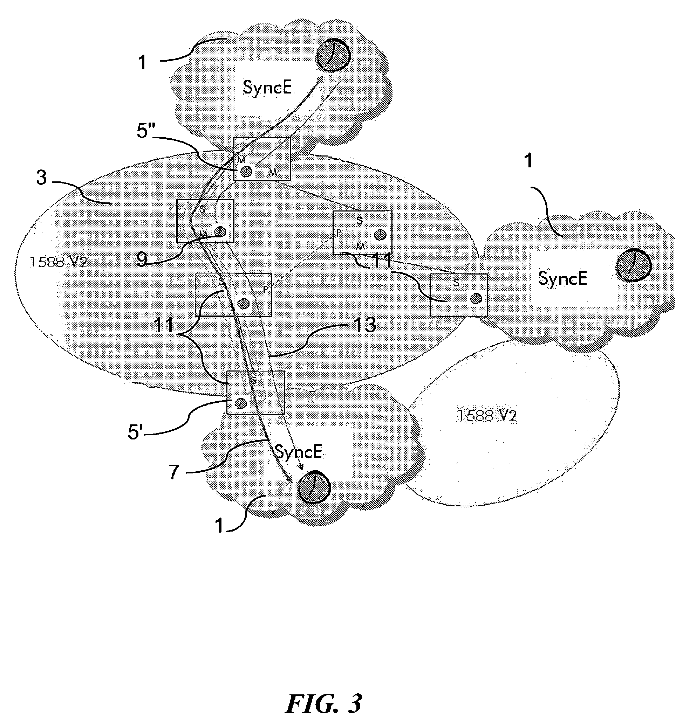

Une idée de la présente invention est de permettre la transmission de signaux de type SSM à travers un domaine dans lequel la synchronisation des horloges est assurée par un protocole de distribution du temps, tel qu'un protocole de type IEEE 1588 V2 ou de type Network Time Protocol (NTP).
Selon un premier mode de réalisation décrit sur la figure 3, les signaux SSM 7 sont transmis à travers un domaine IEEE 1588 V2 3 par un tunnel 9, les signaux SSM 7 non modifiés étant encapsulés dans des paquets de type IEEE 1588 V2 à la frontière entre un premier domaine syncE 1 et le domaine IEEE 1588 V2 3 puis décapsulés à la frontière entre le domaine IEEE 1588 V2 3 et un deuxième domaine syncE 1. Les signaux SSM restent donc inchangés entre l'encapsulation au niveau du premier domaine syncE 1 et la décapsulation au niveau du deuxième domaine syncE 1.
La configuration du tunnel 9 se faisant de manière statique grâce à un plan de gestion (« management plane » en anglais). Le tunnel 9 est créé à partir d'éléments réseau associés à une horloge esclave de frontière 5' vers des éléments réseau associés à une horloge maître de frontière 5" en reliant, à chaque noeud 11 du chemin réseau, le port esclave S au port maître M du noeud 11 suivant. Les ports P correspondant à des ports passifs pouvant être utilisés, comme alternative, en cas d'échec de la transmission.
Dans ce mode de réalisation, les signaux SSM 7 et les paquets des signaux de synchronisation (ou signaux de signalisation) de type IEEE 1588 V2 sont transportés séparément. Néanmoins, les signaux SSM 7 et les signaux de signalisation 1588 V2 13 empruntent le même itinéraire (même « chemin réseau ») afin de détecter les éventuels échecs de transmission se produisant sur le parcours des signaux au sein du réseau associé au domaine IEEE 1588 V2 3.
En cas d'échec de transmission au niveau du tunnel 9 (« clock failure » par exemple), des messages d'échecs sont envoyés à toutes les horloges du domaine IEEE 1588 V2 (situées à chaque noeud réseau du domaine) et un message de type DNU (Do Not Used) est envoyé au niveau de l'horloge esclave de frontière. Ainsi cette dernière ne va pas tenir compte des signaux de synchronisation reçus jusqu'à la reconfiguration, par le plan de gestion, d'un nouveau tunnel associé à la nouvelle topologie IEEE 1588 V2. La reconfiguration de la topologie IEEE 1588 V2 peut être, quant à elle, réalisée dynamiquement grâce à un algorithme de type BMC (Best Master Clock) qui va permettre le calcul d'un nouvel itinéraire pour le tunnel permettant la traçabilité des signaux de synchronisation à travers le domaine IEEE 1588 V2.
Le tunnel 9 peut être défini par un identifiant (« tunnel ID ») et l'identité du domaine IEEE 1588 V2 (« domain ID ») dans lequel le tunnel 9 est établi.

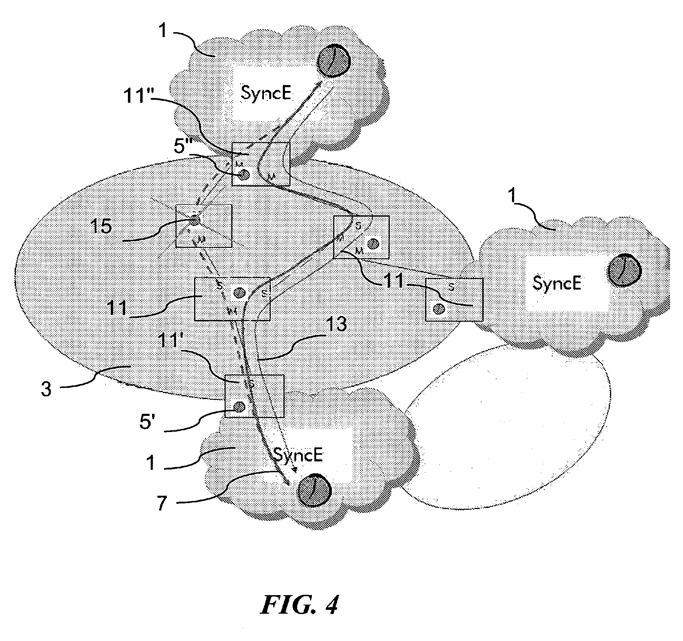

Selon un deuxième mode de réalisation décrit par la figure 4, les messages SSM 7 sont intégrés dans les messages de signalisation de type IEEE 1588 V2 13 (Sur la figure 4, pour plus de clarté, deux traits distincts sont dessinés pour représenter les messages SSM et les messages de signalisation. Néanmoins les signaux SSM sont intégrés dans les signaux de signalisation de type IEEE 1588 V2).
Dans ce cas, les équipements du domaine IEEE 1588 V2 ont des « capacités SSM », c'est à dire qu'ils peuvent décoder et modifier les valeurs transportées par les messages SSM 7. De plus, des champs sont ajoutés aux signaux de synchronisation intégrant des messages SSM pour permettre leur détection et leur manipulation au niveau des équipements IEEE 1588 V2.
Ainsi, un champ de type TLV (Type Length Value) est ajouté aux messages SSM 7 au noeud frontière d'entrée 11'. Ce champ TLV transporte le niveau de qualité (« Quality Level » en anglais) du dernier noeud SyncE. Le chemin réseau transportant les flux de synchronisation 1588 V2 doit donc satisfaire le niveau de qualité fixé au niveau de l'horloge esclave de frontière 5'. Au niveau de la figure 4, le trait en pointillé représente le chemin réseau initial prévu pour transmettre les messages SSM 7 intégrés dans les messages de signalisation de type IEEE 1588 V2 13. Néanmoins, cette transmission initiale échoue à cause d'un événement de type « clock failure » 15 détecté sur le chemin de la transmission.
En cas d'évènement de type « clock failure » 15 détecté sur le chemin de transmission à travers le domaine IEEE 1588 V2 3, cet événement est détecté par les équipements IEEE 1588 V2 et un message d'échec est transmis aux autres noeuds réseau 11 du domaine et notamment aux horloges de frontières 5' et 5". De plus, le champ de niveau de qualité des signaux SSM 7 est mis dans un état DNU (Do Not Use) jusqu'à l'obtention d'un chemin répondant à la contrainte du niveau de qualité de l'horloge esclave de frontière 5'. (La valeur DNU peut-être propagée à partir du noeud où se produit l'évènement de type « clock failure » 15 si celui-ci est encore fonctionnel pour une telle propagation. Dans tous les cas, les horloges de frontière 5" et surtout 5'(détectant l'évènement « clock failure » 15 suite, par exemple, à l'absence prolongée de messages de l'horloge) propagent la valeur DNU vers les domaines SyncE interconnectés.
Les horloges de frontière 5' et 5" lancent alors un « timer » TR1. Le but du « timer » TR1 est de laisser suffisamment de temps aux équipements du domaine IEEE 1588 V2 pour permettre une reconfiguration de la hiérarchie d'horloges. De plus, cette reconfiguration se fait de manière dynamique par les équipements IEEE 1588 V2. En effet, lorsqu'un évènement de type « clock failure » 15 survient comme décrit sur la figure 4, un chemin de synchronisation alternatif est calculé par un algorithme de type « Best Master Clock » en respectant le niveau de qualité requis au niveau de l'horloge esclave frontière. Si un chemin alternatif est trouvé dans un délai inférieur à TR1, ce dernier est établi et le champ de qualité du SSM intégré dans la signalisation du protocole de temps reprend sa valeur initiale.
Lorsque la transmission du flux SSM 7 jusqu'à l'horloge esclave de frontière 5' est réalisée avec un niveau de qualité suffisant, le champ TLV des signaux SSM 7 est alors supprimé et le flux peut se propager dans le domaine SyncE 1.
Si la reconfiguration échoue, à l'expiration du « timer » TR1, l'horloge de frontière 5' envoie dans son domaine SyncE 1 des signaux SSM avec des niveaux de qualité DNU (Do Not Use).

Du fait de l'aspect diffusion des messages IEEE 1588V2 issues de l'horloge maître de frontière- un mécanisme de filtrage supplémentaire peut être utilisé pour limiter la diffusion de l'information SSM aux seuls noeuds se trouvant sur le chemin de la transmission de la fréquence de l'horloge maître vers l'horloge « esclave de frontière ». Ce mécanisme consiste en une signalisation générée à partir de l'horloge esclave de frontière remontant le chemin précédent jusqu'à l'horloge « maître de frontière » (dans la mesure où le chemin est unique de « l'horloge esclave » vers « l'horloge maître »). Un autre «trimer » (ex. TR2) peut optionnellement être adopté pour tenir compte du temps nécessaire à la mise en place de ce mécanisme.

Ainsi, la présente invention permet, selon deux modes de réalisation différents, de transmettre des signaux d'état de synchronisation générés par un domaine utilisant une technologie de couche physique synchrone à travers un domaine où la synchronisation se fait par un protocole de distribution du temps.

## Revendications

1. Procédé de distribution d'une référence de fréquence dans un réseau hétérogène à commutation de paquets comprenant un premier et un deuxième domaine (1) dans lesquels une fréquence de synchronisation est distribuée par une technologie de couche physique synchrone et un troisième domaine (3) comprenant une chaîne de distribution du temps et de la fréquence gérée par un protocole de distribution du temps, ledit troisième domaine (3) interconnectant lesdits premier et deuxième domaine (1), ledit procédé étant **caractérisé par** les étapes suivantes:
- établir un flux de signalisation transmis à travers le troisième domaine (3) par ladite chaîne de distribution afin de distribuer une référence de fréquence du premier domaine (1) vers le deuxième domaine (1) à l'aide du protocole de distribution du temps et,
- envoyer, dans ledit flux de signalisation, des messages d'état de synchronisation (7) issus du premier ou du deuxième domaine (1) afin d'assurer le suivi de la qualité de cette distribution dans le troisième domaine (3).

2. Procédé de distribution d'une référence de fréquence selon la revendication 1 dans laquelle, l'étape d'envoi, dans ledit flux de signalisation, des messages d'état de synchronisation (7) issus du premier ou du deuxième domaine (1) comprend les étapes suivantes:
- encapsuler, à l'entrée du troisième domaine (3), les messages d'état de synchronisation (7) non modifiés issus respectivement du premier ou du deuxième domaine (1) dans des paquets gérés par le protocole de distribution du temps;
- transmettre lesdits paquets à travers le troisième domaine (3);
- décapsuler, à la sortie du troisième domaine, (3) lesdits messages d'état de synchronisation (7) non modifiés afin de les transmettre respectivement au deuxième ou au premier domaine (1),

3. Procédé de distribution d'une référence de fréquence selon la revendication 1 dans lequel les messages d'état de synchronisation (7) sont des messages de type Synchronous Status Message (SSM).

4. Procédé de distribution d'une référence de fréquence selon la revendication 1 ou 2 dans lequel le protocole de distribution du temps est de type IEEE 1588 V2.

5. Procédé de distribution d'une référence de fréquence selon l'une des revendications précédentes dans lequel, en cas d'échec de la transmission du flux de signalisation à travers le troisième domaine (3) par ladite chaîne de distribution, on enclenche des mécanismes de protection et de réorganisation de la topologie de synchronisation du troisième domaine (3)

6. Procédé de distribution d'une référence de fréquence selon la revendication 4 dans lequel la topologie de synchronisation entre le premier et le deuxième domaine (1) est déterminée par le protocole de distribution du temps

7. Procédé de distribution d'une référence de fréquence selon l'une des revendications précédentes dans lequel le flux de signalisation à travers le troisième domaine (3) est réalisé par un tunnel créé entre des éléments de réseau associés aux horloges esclave de frontière du deuxième domaine (1) et des éléments de réseau associés aux horloges maître ou grand maître de frontière du premier domaine (1)

8. Procédé de distribution d'une référence de fréquence selon l'une des revendications 2 à 6 prises ensemble avec la revendication 2 dans lequel on transmet les messages d'état de synchronisation (7) de type Synchronous Status Message (SSM), dans le troisième domaine (3), sur le même chemin réseau que les messages de synchronisation.

9. Procédé de distribution d'une référence de fréquence selon l'une des revendications 2 à 5 dans lequel on intègre les messages d'état de synchronisation (7) de type Synchronous Status Message (SSM) dans des messages de synchronisation du troisième domaine (3).

10. Procédé de distribution d'une référence de fréquence selon la revendication 8 dans lequel on ajoute, à l'entrée du troisième domaine (3), des champs de données additionnels reprenant la sémantique Synchronous Status Message (SSM) aux messages de synchronisation.

11. Procédé de distribution d'une référence de fréquence selon la revendication 9 dans lequel les champs de données additionnels comprennent un champ Type Length Value (TLV).

12. Procédé de distribution d'une référence de fréquence selon l'une des revendications 8 à 10 dans lequel le flux de signalisation comprenant les messages de type Synchronous Status Message (SSM) intégrés dans les messages de synchronisation est reconfiguré, de manière dynamique, en cas d'échec de la transmission dudit flux à travers le troisième domaine (3).

13. Procédé de distribution d'une référence de fréquence selon la revendication 11 dans lequel la reconfiguration comprend une reconfiguration de la hiérarchie d'horloge assurée par le protocole de distribution du temps du troisième domaine (3),

14. Equipement de transmission de flux de signalisation dans un domaine (3) géré par un protocole de distribution du temps pour la mise en oeuvre d'un procédé de distribution selon l'une des revendications 1 à 13 comprenant des moyens aptes à:
- établir un flux de signalisation à travers ledit domaine (3) géré par un protocole de distribution du temps,
- encapsuler, à l'entrée dudit domaine (3) géré par le protocole de distribution du temps, des messages d'état de synchronisation non modifiés issus d'un premier domaine (1) dans lequel une fréquence de synchronisation est (7) distribuée par une technologie de couche physique synchrone dans des paquets gérés par le protocole de distribution du temps,
- transmettre lesdits paquets à travers ledit domaine (3) géré par le protocole de distribution du temps,
- décapsuler, à la sortie dudit domaine (3), lesdits messages d'état de synchronisation (7) non modifiés afin de les transmettre à un deuxième domaine (1) dans lequel une fréquence de synchronisation est distribuée par une technologie de couche physique synchrone.

15. Equipement de transmission selon la revendication 14 comprenant des moyens permettant d'ajouter à des messages de synchronisation du protocole de temps des champs de données additionnels reprenant la sémantique Synchronous Status Message (SSM).

16. Equipement de transmission selon la revendication 14 ou 15 comprenant des moyens de détection d'un événement de type « clock failure » se produisant durant la transmission de messages de type Synchronous Status Message (SSM) intégrés dans des messages de synchronisation.

## Claims

1. A method for distributing a frequency reference within a packet-switched heterogeneous network comprising a first and a second domain (1) wherein a synchronization frequency is distributed by a synchronous physical layer technology, and a third domain (3) comprising a time and frequency distribution channel managed by a time-distribution protocol, said third domain (3) connecting said first and second domains (1) to one another, and said method comprising the following steps:
- establishing a signaling feed transmitted through the third domain (3) by said distribution channel in order to distribute a frequency reference from the first domain (1) to the second domain (1) with the assistance of a time-distribution protocol, and
- sending, within said signaling feed, synchronization status messages originating from the first or second domain (1) in order to track the quality of this distribution within the third domain (3).

2. A method for distributing a frequency reference according to claim 1 wherein the step of sending synchronization status messages (7) originating from the first or second domain (1) within said signaling feed comprises the following steps:
- encapsulating, at the entrance of the third domain (3), the unaltered synchronization status messages (7) respectively originating from the first or second domain (1) in packets managed by the time-distribution protocol;
- transmitting said packets through the third domain (3);
- decapsulating, at the exit of the third domain (3), said unaltered synchronization status messages (7) in order to respectively transmit them to the second or first domain (1).

3. A method for distributing a frequency reference according to claim 1, wherein the synchronization status messages (7) are Synchronous Status Messages (SSM).

4. A method for distributing a frequency reference according to claim 1 or 2, wherein the time-distribution protocol is an IEEE 1588 V2 protocol.

5. A method for distributing a frequency reference according to one of the preceding claims, wherein, if the transmission of the signaling feed through the third domain (3) by said distribution channel fails, mechanisms to protect and reorganize the synchronization topology of the third domain (3) are triggered.

6. A method for distributing a frequency reference according to claim 4, wherein the synchronization topology between the first and second domain (1) is determined by the time-distribution protocol.

7. A method for distributing a frequency reference according to one of the preceding claims, wherein the signaling feed through the third domain (3) is achieved by a tunnel created between network elements associated with the slave boundary clocks of the second domain (1) and network elements associated with the master or grandmaster boundary clocks of the first domain (1).

8. A method for distributing a frequency reference according to one of the claims 2 to 6 in combination with claim 2, in which synchronization status messages (7) that are Synchronous Status Messages (SSM) are transmitted, within the third domain (3), on the same network path as synchronization messages.

9. A method for distributing a frequency reference according to one of the claims 2 to 5, wherein the synchronization status messages (7) that are Synchronous Status Messages (SSM) are incorporated into the synchronization messages of the third domain (3).

10. A method for distributing a frequency reference according to claim 8, wherein, at the entrance of the third domain (3), additional data fields are added that reproduce the Synchronous Status Message (SSM) semantics in the synchronization messages.

11. A method for distributing a frequency reference according to claim 9, wherein the additional data fields comprise a Type Length Value (TLV) field.

12. A method for distributing a frequency reference according to one of the claims 8 to 10 wherein the signaling feed comprising Synchronous Status Messages (SSM) integrated within the synchronization messages is dynamically reconfigured in the event that the transmission of the feed over the third domain (3) were to fail.

13. A method for distributing a frequency reference according to claim 11, wherein the reconfiguration comprises a reconfiguration of the clock hierarchy ensured by the time-distribution protocol of the third domain (3).

14. A device for transmitting signaling feeds in one domain (3) managed by a time-distribution protocol to implement a method for distributing a frequency reference according to one of the claims 1 to 13, comprising means capable of:
- establishing a signaling feed through said domain (3) managed by a time-distribution protocol,
- encapsulating, at the entrance of said domain (3) managed by the time-distribution protocol, unaltered synchronization status messages (7) originating from a first domain (1) in which a synchronization frequency is distributed by a synchronous physical layer technology in packets managed by the time-distribution protocol,
- transmitting said packets through said domain (3) managed by the time-distribution protocol,
- decapsulating, at the exit of said domain (3), said unaltered synchronization status messages (7) in order to transmit them to a second domain (1) in which a synchronization frequency is distributed by a synchronous physical layer technology.

15. A transmission device according to claim 14 comprising means that make it possible to add additional data fields, reproducing the Synchronous Status Message (SSM) semantics, to the time protocol's synchronization messages.

16. A transmission device according to claim 14 or 15 comprising means for detecting a "clock failure" event occurring during the transmission of Synchronous Status Messages (SSM) incorporated into the synchronization messages.

## Patentansprüche

1. Verfahren zum Verteilen einer Frequenzreferenz in einem heterogenen Paketnetzwerk mit einer ersten und einer zweiten Domäne (1), in denen eine Synchronisationsfrequenz unter Anwendung einer synchronen physischen Schicht-Technologie verteilt wird, und einer dritten Domäne (3), welche eine von einem Zeitverteilungsprotokoll verwaltete Zeit- und Frequenzverteilungskette umfasst, wobei die besagte dritte Domäne (3) die besagte erste und die besagte zweite Domäne (1) miteinander verbindet, wobei das besagte Verfahren durch die folgenden Schritte gekennzeichnet ist:
- Herstellen eines Signalisierungsstroms, welcher von der besagten Verteilungskette durch die dritte Domäne (3) hindurch übertragen wird, um eine Frequenzreferenz anhand eines Zeitverteilungsprotokoll von der ersten Domäne (1) an die zweite Domäne (1) zu verteilen, und
- Senden, in dem besagten Signalisierungsstrom, von Synchronisationszustandsnachrichten (7), welche von der ersten oder der zweiten Domäne (1) stammen, um die Überwachung der Qualität dieser Verteilung in der dritten Domäne (3) zu gewährleisten.

2. Verfahren zum Verteilen einer Frequenzreferenz nach Anspruch 1, wobei der Schritt des Sendens, in dem besagten Signalisierungsstrom, der von der ersten oder der zweiten Domäne (1) stammenden Synchronisationszustandsnachrichten (7) die folgenden Schritte umfasst:
- Einkapseln, am Eingang der dritten Domäne (3) der unveränderten, jeweils von der ersten oder der zweiten Domäne (1) stammenden Synchronisationszustandsnachrichten (7) in von dem Zeitverteilungsprotokoll verwaltete Pakete;
- Übertragen der besagten Pakete durch die dritte Domäne (3) hindurch;
- Entkapseln, am Ausgang der dritten Domäne (3), der besagten unveränderten Synchronisationszustandsnachrichten (7), um sie jeweils an die zweite oder die erste Domäne (1) zu übertragen.

3. Verfahren zum Verteilen einer Frequenzreferenz nach Anspruch 1, wobei die Synchronisationszustandsnachrichten (7) Nachrichten vom Typ Synchronous Status Message (SSM) sind.

4. Verfahren zum Verteilen einer Frequenzreferenz nach Anspruch 1 oder 2, wobei das Zeitverteilungsprotokoll vom Typ IEEE 1588 V2 ist.

5. Verfahren zum Verteilen einer Frequenzreferenz nach einem der vorstehenden Ansprüche, wobei man, wenn die Übertragung des Signalisierungsstroms durch die besagte Verteilungskette durch die dritte Domäne (3) hindurch fehlschlägt, Mechanismen zum Schutz und zur Reorganisation der Synchronisationstopologie der dritten Domäne (3) auslöst.

6. Verfahren zum Verteilen einer Frequenzreferenz nach Anspruch 4, wobei die Topologie der Synchronisation zwischen der ersten und der zweiten Domäne (1) von dem Zeitverteilungsprotokoll bestimmt wird.

7. Verfahren zum Verteilen einer Frequenzreferenz nach einem der vorstehenden Ansprüche, wobei die Übertragung des Signalisierungsstroms durch die dritte Domäne (3) hindurch über einen zwischen Netzwerkelementen, die mit den Slave-Takten an der Grenze der zweiten Domäne (1) assoziiert sind, und Netzwerkelementen, die mit den Master- oder Grand-Master-Takten an der Grenze der ersten Domäne (1) assoziiert sind, aufgebauten Tunnel erfolgt.

8. Verfahren zum Verteilen einer Frequenzreferenz nach einem der Ansprüche 2 bis 6 in Verbindung mit Anspruch 2, wobei man die Synchronisationszustandsnachrichten (7) vom Typ Synchronous Status Message (SSM), in der dritten Domäne (3), auf demselben Netzwerkpfad wie die Synchronisationsnachrichten überträgt.

9. Verfahren zum Verteilen einer Frequenzreferenz nach einem der Ansprüche 2 bis 5, wobei man die Synchronisationszustandsnachrichten (7) vom Typ Synchronous Status Message (SSM) in Synchronisationsnachrichten der dritten Domäne (3) integriert.

10. Verfahren zum Verteilen einer Frequenzreferenz nach Anspruch 8, wobei man am Eingang der dritten Domäne (3) zusätzliche Datenfelder, welche die Semantik der Synchronous Status Message (SSM) übernehmen, zu den Synchronisationsnachrichten hinzufügt.

11. Verfahren zum Verteilen einer Frequenzreferenz nach Anspruch 9, wobei die zusätzlichen Datenfelder ein Type Length Value bzw. TLV-Feld umfassen.

12. Verfahren zum Verteilen einer Frequenzreferenz nach einem der Ansprüche 8 bis 10, wobei der Signalisierungsstrom, welcher die Nachrichten vom Typ Synchronous Status Message (SSM), die in den Synchronisationsnachrichten integriert sind, enthält, im Fall des Fehlschlagens der Übertragung des besagten Stroms durch die dritte Domäne (3) hindurch dynamisch rekonfiguriert wird.

13. Verfahren zum Verteilen einer Frequenzreferenz nach Anspruch 11, wobei die Rekonfiguration eine Rekonfiguration der von dem Zeitverteilungsprotokoll der dritten Domäne (3) gewährleisteten Takthierarchie umfasst.

14. Vorrichtung zur Übertragung von Signalisierungsströmen in einer von einem Zeitverteilungsprotokoll verwalteten Domäne (3) für die Durchführung eines Verteilverfahrens gemäß einem der Ansprüche 1 bis 13, wobei die Vorrichtung Mittel umfasst, die für das Durchführen der folgenden Schritte ausgelegt sind:
- Herstellen eines Signalisierungsstroms durch die besagte von einem Zeitverteilungsprotokoll verwaltete Domäne (3) hindurch,
- Einkapseln, am Eingang der von dem Zeitverteilungsprotokoll verwalteten Domäne (3), von unveränderten Synchronisationszustandsnachrichten (7), die jeweils von einer ersten Domäne (1) stammen, in welcher eine Synchronisationsfrequenz unter Anwendung einer synchronen physischen Schicht-Technologie in von dem Zeitverteilungsprotokoll verwaltete Pakete verteilt wird,
- Übertragen der besagten Pakete durch die besagte von dem Zeitverteilungsprotokoll verwaltete Domäne (3) hindurch,
- Entkapseln, am Ausgang der besagten Domäne (3), der besagten unveränderten Synchronisationszustandsnachrichten (7), um sie an eine zweite Domäne (1) zu übertragen, in welcher eine Synchronisationsfrequenz unter Anwendung einer synchronen physischen Schicht-Technologie verteilt wird.

15. Übertragungsvorrichtung nach Anspruch 14, umfassend Mittel zum Hinzufügen, zu den Synchronisationsnachrichten des Zeitprotokolls, von zusätzlichen Datenfeldern, welche die Semantik der Synchronous Status Message (SSM) übernehmen.

16. Übertragungsvorrichtung nach Anspruch 14 oder 15, umfassend Mittel zum Erkennen eines Ereignisses vom Typ "clock failure", welches während der Übertragung von Nachrichten vom Typ Synchronous Status Message (SSM), die in den Synchronisationsnachrichten integriert sind, auftritt.
